Europäisches Patentamt

European Patent Office

Office européen des brevets

(19)

(11) EP 0 704 571 B1

(12) **EUROPEAN PATENT SPECIFICATION**

(45) Date of publication and mention
of the grant of the patent:
**23.05.2001 Bulletin 2001/21**

(51) Int Cl.[7]: **D06M 15/643**, D06M 13/188

(21) Application number: **95306026.6**

(22) Date of filing: **30.08.1995**

(54) **Fibre treatment compositions**

Faserbehandlungszusammensetzungen

Compositions pour le traitement textile

(84) Designated Contracting States:
**DE FR GB NL**

(30) Priority: **31.08.1994 JP 23078794**

(43) Date of publication of application:
**03.04.1996 Bulletin 1996/14**

(73) Proprietor: **Dow Corning Toray Silicone Company Limited**
**Tokyo (JP)**

(72) Inventors:
• **Aso, Takayuki, Dow Corning Toray Silicone**
**Nihonbashi-Muromachi, Chuo-ku,**
**Tokyo 103 (JP)**

• **Ona, Isao, Dow Corning Toray Silicone**
**Nihonbashi-Muromachi, Chuo-ku,**
**Tokyo 103 (JP)**
• **Ozaki, Masaru, Dow Corning Toray Silicone**
**Nihonbashi-Muromachi, Chuo-ku,**
**Tokyo 103 (JP)**

(74) Representative: **Hall, Marina**
**Elkington and Fife**
**Prospect House,**
**8 Pembroke Road**
**Sevenoaks, Kent TN13 1XR (GB)**

(56) References cited:
**EP-A- 0 100 826        EP-A- 0 349 753**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to a fiber treatment composition that produces fibers having excellent smoothness or antistick performance, and to a composition which exhibits excellent dispersion stability.

Because of excellent heat resistance and lubricity, the dimethylpolysiloxane oils have become widely used as neat fiber treatment agents for mechanical sewing thread and highly elastic polyurethane fibers (i.e. spandex). As used herein, the term "neat" denotes a treatment agent that contains 100% fiber treatment agent and does not contain solvent or water. For example, in JP-A 50-078695 discloses that smoothness and antistick characteristics of fibers can be improved through the combined used of a dimethylpolysiloxane oil and the metal salt of a higher fatty acid.

However, dimethylpolysiloxane oils and higher fatty acid metal salts are completely incompatible, which adversely affects the dispersibility of these compositions, and sedimentation also occurs immediately when they are allowed to stand. The addition of a suspension agent to these compositions has been used as a method for improving dispersibility, but the use of a suspension agent reduces the lubricity of the treated fiber.

Pretreatment of the metal salt with an organic solvent, such as a low molecular-weight alcohol, has also been disclosed for the purpose of improving dispersion stability in JP-A 3-500183. This method is compromised by the use of an organic solvent, which raises the risk of air and water pollution, ignition or detonation, and human toxicity.

JP-B 63-012197 teaches a fiber treatment composition that contains an organopolysiloxane resin. The neat lubricant is a composition comprising dimethylpolysiloxane oil, a particular organopolysiloxane resin, and a higher fatty acid such as stearic acid. Since this composition contains a higher fatty acid, the corresponding smoothness is quite susceptible to variations in response caused by changes in temperature. Also, sticking between the treated fibers tendsto occur quite readily.

It is an object of this invention to produce a fiber treatment composition which provides excellent smoothness or antistick performance to fibers, and which exhibits excellent dispersion stability.

It is a further object of the invention to provide a composition which is especially useful as a neat lubricant for highly elastic polyurethane fibers.

The present invention provides a fiber treatment composition comprising (A) 100 weight parts of a dimethylpolysiloxane having a viscosity at 25°C of 2 to 100 mm$^2$/s, (B) 1 to 20 weight parts of a metal salt of a fatty acid having from 10 to 20 carbon atoms, and (C) 0.05 to 10 weight parts of at least one organopolysiloxane resin comprising $SiO_{4/2}$ units and $R_3SiO_{1/2}$ units wherein R denotes a monovalent hydrocarbon group, with the proviso that said resin is free of $RSiO_{3/2}$ units when R is as defined above. The dimethylpolysiloxane is preferably a triorganosiloxy-endblocked dimethylpolysiloxane. The dimethylpolysiloxane of (A) imparts lubricity to the fiber. This component has a viscosity at 25°C of 2 to 100 mm$^2$/s. The imparted lubricity is inadequate at viscosities below 2 mm$^2$/s, while fiber absorption of dimethylpolysiloxane becomes too large at viscosities in excess of 100 mm$^2$/s. The dimethylpolysiloxane may have a straight-chain or cyclic molecular structure. The straight-chain versions of (A) may be partially branched, and are preferably endblocked by trimethylsiloxy or dimethylhydroxy groups.

Component (B) is a metal salt of a fatty acid having from 10 to 20 carbon atoms, and this component inhibits adhesion or sticking between the fibers. It is exemplified by magnesium stearate, zinc stearate, calcium stearate, and barium stearate. This component should be added at 1 to 20 weight parts per 100 weight parts of component (A), and preferably at 4 to 8 weight parts per 100 weight parts of (A). The antistick performance is inadequate at below 1 weight part, and the fluidity at more than 20 weight parts can negatively affect the lubricity of the treated fiber.

The organopolysiloxane resin of component (C) is compatible with component (A). This resin comprises siloxane units having the formula $SiO_{4/2}$ and siloxane units of the formula $R_3SiO_{1/2}$, and it must also be free of siloxane units having the formula $RSiO_{3/2}$. R denotes monovalent hydrocarbon groups and is exemplified by alkyl groups such as methyl, ethyl, propyl, tert-butyl, 2-ethylhexyl, dodecyl, and octadecyl; alkenyl groups such as vinyl, allyl, and hexadienyl; aryl groups such as phenyl or naphthyl; and haloalkyl groups such as chloromethyl, 3,3,3-trifluoropropyl, 3,3,4,4,5,5,5-heptafluoropentyl, and difluoromonochloropropyl. It is preferred that R is selected from alkyl, alkenyl, or haloalkyl groups, with methyl being particularly preferred.

The molar ratio of (C), in terms of $SiO_{4/2}$ siloxane unit to $R_3SiO_{1/2}$ siloxane unit is preferably in the rangeof from 1:0.6 to 1:0.9. The organopolysiloxane resin (C) is prepared by (a) treating water glass with trialkylchlorosilane; (b) hydrolyzing one or more chlorosilanes characterized by having an average of 0.1 to 2.4 monovalent hydrocarbon groups per silicon atom; and (c) the acid- or base- catalyzed condensation of one or more organoalkoxysilanes also characterized by 0.1 to 2.4 monovalent hydrocarbon groups per silicon atom.

The organopolysiloxane resin (C) may further comprise SiOR' groups where R' is selected from hydrogen atom, a monovalent hydrocarbon, or methoxyethyl. The monovalent hydrocarbon groups of R' are exemplified by methyl, ethyl, propyl, tert-butyl, dodecyl, 1-isobutyl-3,5-dimethylhexyl, or octadecyl. It is preferred that R' is methyl.

Component (C) is an organopolysiloxane resin as described above, or it is an organopolysiloxane resin made by further heating said resin to effect partial, silanol-group condensation. Component (C) may comprise a single organopolysiloxane resin, or a combination of such resins.

This component is added in a range of from 0.05 to 10 weight parts per 100 weight parts of component (A). It is preferably added in a range of from 0.2 to 6 weight parts per 100 weight parts of component (A). Below 0.05 weight parts, the dispersion stability is unsatisfactory, and at more than 10 weight parts, the properties of the treated fiber, and of the lubricant itself, may be negatively affected.

The composition of this invention basically comprises the components (A), (B), and (C) but other components may be added insofar as the objects of the present invention are not impaired. These additives are exemplified by rust preventives, antistatics, and organopolysiloxanes other than those of components (A) and (C).

Our composition is prepared by the simple mixing of components (A), (B), and (C), but it is preferably prepared by preliminarily mixing components (B) and (C), and thereafter adding component (A).

Substrates, especially fibers, are treated with the claimed composition by, for example, (i) dipping the fiber in a treatment bath of the composition followed by roll expression, or (ii) contacting a run of the fiber with a pick-up roll. While composition add-on will vary with the type of fiber, an add-on in the range of from 0.05 to 7.0 weight percent calculated as an organopolysiloxane fraction referred to fiber, is generally preferred. An add-on range **of from 0.5** to 5.0 wt% is particularly preferred. Heat treatment is preferably effected after application to achieve uniform treatment of the substrate with the composition of the invention. Fibers that can be treated with the inventive compositions are natural fibers such as wool, silk, flax, cotton, angora, and mohair; regenerated fibers such as rayon and bemberg; semisynthetic fibers such as acetate, and synthetic fibers such as polyester, polyamide, polyacrylonitrile, polyvinyl chloride, vinylon, polyethylene, polypropylene, and polyurethane (spandex).

The present invention is explained below through working examples, in which parts denotes weight parts, and % denotes weighty unless otherwise indicated. The viscosity is the value measured at 25°C. The prepared fiber treatment compositions were tested for sedimentation score and fiber/metal coefficient of kinetic friction using the following methods. The dispersion stability was evaluated based on the sedimentation score.

Sedimentation Score

First, 100 ml of a prepared fiber treatment composition were introduced into, and held in a 100 cm$^3$ graduated cylinder. After a specified time (1, 2, 3, or 30 days), the volume of the composition ($V_1$ in ml) and the interface between the supernatant and the produced white turbidity ($V_2$ in ml) were measured. These values were used to calculate the sedimentation score (%) from the following equation:

$$\text{sedimentation score (\%)} = (V_1 - V_2)/V_1 \times 100$$

Fiber/Metal Coefficient of Kinetic Friction

Mechanical sewing thread (100% cotton) was dipped in a 10 weight% toluene solution of the fiber treatment composition for 30 seconds. The machine thread was then removed, wrung out to an add-on of 2.0 wt% fiber treatment composition, and dried. The treated machine thread was measured for its fiber/metal coefficient of kinetic friction using a measuring instrument from Daiei Kagaku Seiki Seisakusho Kabushiki Kaisha.

Example 1

The following were combined and mixed for 15 minutes: 6.0 parts of trimethylsiloxy-endblocked dimethylpolysiloxane having a viscosity of 10 mm$^2$/s, 6.0 parts of magnesium stearate, and 1.8 parts of a methylpolysiloxane resin comprising 45 mole% $(CH_3)_3SiO_{1/2}$ units and 55 mole% $SiO_{4/2}$ units (silanol groups were not present in the resin). This was followed by the addition of 86.2 parts of a trimethylsiloxy-endblocked dimethylpolysiloxane having a viscosity of 10 mm$^2$/s and mixing for 15 minutes which resulted in a fiber treatment composition of this invention. The composition was then tested for measurement of its sedimentation score, viscosity, and fiber/metal coefficient of kinetic friction. The results are reported in Table I. Table I also gives a general evaluation of suitability for use as a neat fiber treatment composition.

Example 2

The following were combined and mixed for 15 minutes: 6.0 parts of trimethylsiloxy-endblocked dimethylpolysiloxane having a viscosity of 10 mm$^2$/s, 6.0 parts of magnesium stearate, and 1.8 parts of a methylpolysiloxane resin comprising 45 mole% $(CH_3)_3SiO_{1/2}$ units, 55 mole% $SiO_{4/2}$ units, and about 2.5 wt% silanol groups. This was followed by the addition of 86.2 parts of a trimethylsiloxy-endblocked dimethylpolysiloxane having a viscosity of 10 mm$^2$/s and mixing for 15 minutes which resulted in a fiber treatment composition of this invention. This composition was tested for sedimentation score, viscosity, and fiber/metal coefficient of kinetic friction as above. The results are reported in Table I. Table I also gives a general evaluation of suitability as a neat fiber treatment composition.

Comparative Example 1

A neat fiber treatment composition was prepared as in Example 1, but a methylphenylsiloxane resi-n was used in place of the methylpolysiloxane resin. This methylphenylsiloxane resin comprised 85 mole% of a siloxane resin comprising $SiO_{4/2}$ units and $(CH_3)_3SiO_{1/2}$ units and 15 mole% of a siloxane resin comprising $CH_3SiO_{3/2}$ units and $C_6H_5SiO_{3/2}$ units. The results for sedimentation score, viscosity, and fiber/metal coefficient of kinetic friction are reported in Table I. A general evaluation of its suitability for use as a neat fiber treatment composition is also listed therein.

Comparative Example 2

A neat fiber treatment composition was prepared as in Example 1, an organosiloxane resin comprising $C_5H_{11}SiO_{3/2}$ units was used in place of the methylpolysiloxane resin. This composition was tested for sedimentation score, viscosity, and fiber/metal coefficient of kinetic friction, and the results are reported in Table I. Table I also has a general evaluation for use as a neat fiber treatment composition.

Comparative Example 3

First, 1.8 parts of isopropyl alcohol was mixed for 15 minutes with 6.0 parts of magnesium stearate. This was followed by the addition of 92.2 parts of a trimethylsiloxy-endblocked dimethylpolysiloxane having a viscosity of 10 $mm^2$/s and further mixing for 15 minutes. This produced a comparative fiber treatment composition which was tested for sedimentation score, viscosity, and fiber/metal coefficient of kinetic friction. The results are reported in Table I, including a general evaluation for use as a neat fiber treatment composition.

Comparative Example 4

The following were combined and mixed for 15 minutes: 6.0 parts of a trimethylsiloxy-endblocked dimethylpolysiloxane having a viscosity of 10 $mm^2$/s and 6.0 parts of magnesium stearate. This was followed by addition of 88.0 parts of a trimethylsiloxy-endblocked dimethylpolysiloxane having a viscosity of 10 $mm^2$/s and further mixing for 15 minutes which resulted in a fiber treatment composition. The composition was then tested for sedimentation score, viscosity, and fiber/metal coefficient of kinetic friction, and the results are reported in Table I. Table I also gives a general evaluation of suitability as a neat fiber treatment composition.

Table I

| | sedimentation score (%) | | | | viscosity ($mm^2$/s) | fiber/metal coefficient of kinetic friction | general evaluation |
|---|---|---|---|---|---|---|---|
| | 1 day | 2 days | 3 day | 30 days | | | |
| Ex. 1 | 0.8 | 1.0 | 1.1 | 7.7 | 21.1 | 0.120 | optimal: excellent dispersion stability |
| Ex. 2 | 0.6 | 0.9 | 1.1 | 8.0 | 21.3 | 0.106 | optimal: excellent dispersion stability |
| Comp. Ex. 1 | 1.0 | 1.5 | 1.8 | 15.9 | 21.9 | 0.112 | unsuitable: low dispersion stability |
| Comp. Ex. 2 | 1.5 | 2.5 | 3.3 | 22.8 | 21.1 | 0.120 | unsuitable: low dispersion stability |

Table I   (continued)

| | sedimentation score (%) | | | | viscosity (mm$^2$/s) | fiber/metal coefficient of kinetic friction | general evaluation |
|---|---|---|---|---|---|---|---|
| | 1 day | 2 days | 3 day | 30 days | | | |
| Comp. Ex. 3 | 0.6 | 1.1 | 1.5 | 15.2 | 20.3 | 0.114 | unsuitable: unsatisfactory dispersion stability |
| Comp. Ex. 4 | 1.5 | 2.6 | 3.4 | 23.3 | 19.3 | 0.111 | unsuitable: low dispersion stability |

Example 3

The following were combined and mixed for 15 minutes: 6.0 parts of a trimethylsiloxy-endblocked dimethylpolysiloxane having a viscosity of 10 mm$^2$/s, 6.0 parts of magnesium stearate, and 0.3 part of a methylpolysiloxane resin comprising 45 mole% $(CH_3)_3SiO_{1/2}$ units and 55 mole% $SiO_{4/2}$ units (no silanol groups). This was followed by the addition of 87.7 parts of a trimethylsiloxy-endblocked dimethylpolysiloxane having a viscosity of 10 mm$^2$/s and further mixing for 15 minutes which resulted in a fiber treatment composition of this invention. This composition was tested for sedimentation score, viscosity, and fiber/metal coefficient of kinetic friction, and the results are reported in Table II. Table II also has a general evaluation of its suitability for use as a neat fiber treatment composition.

Example 4

The following were combined and mixed for 15 minutes: 6.0 parts of a trimethylsiloxy-endblocked dimethylpolysiloxane having a viscosity of 10 mm$^2$/s, 6.0 parts of magnesium stearate, and 1.0 parts of a methylpolysiloxane resin comprising 45 mole% $(CH_3)_3SiO_{1/2}$ units and 55 mole% $SiO_{4/2}$ units (no silanol groups). This was followed by the addition of 87.0 parts of a trimethylsiloxy-endblocked dimethylpolysiloxane having a viscosity of 10 mm$^2$/s and further mixing for 15 minutes which resulted in a fiber treatment composition of this invention. The composition was tested for sedimentation score, viscosity, and fiber/metal coefficient of kinetic friction, and the results are reported in Table II. Table II also reports a general evaluation as a suitable, neat, fiber treatment composition.

Example 5

The following were combined and mixed for 15 minutes: 6.0 parts of a trimethylsiloxy-endblocked dimethylpolysiloxane having a viscosity of 10 mm$^2$/s, 6.0 parts of magnesium stearate, and 3.0 parts of a methylpolysiloxane resin comprising 45 mole% $(CH_3)_3SiO_{1/2}$ units and 55 mole% $SiO_{4/2}$ units (no silanol groups). This was followed by addition of 85.0 parts of a trimethylsiloxy-endblocked dimethylpolysiloxane having a viscosity of 10 mm$^2$/s and additional mixing for 15 minutes which resulted in a fiber treatment composition of this invention. This composition was tested for sedimentation score, viscosity, and fiber/metal coefficient of kinetic friction, and the results are reported in Table II. A general evaluation of its suitability for use as a neat fiber treatment composition is also included.

Comparative Example 5

The following were combined and mixed for 15 minutes: 6.0 parts of a trimethylsiloxy-endblocked dimethylpolysiloxane having a viscosity of 10 mm$^2$/s, 6.0 parts of magnesium stearate, and 0.03 part of a methylpolysiloxane resin comprising 45 mole% $(CH_3)_3SiO_{1/2}$ units and 55 mole% $SiO_{4/2}$ units (no silanol groups). This was followed by the addition of 87.97 parts of a trimethylsiloxy-endblocked dimethylpolysiloxane having a viscosity of 10 mm$^2$/s and further mixing for 15 minutes which resulted in a comparative fiber treatment composition. This composition was tested for sedimentation score, viscosity, and fiber/metal coefficient of kinetic friction. The results are reported in Table II along with a general evaluation of suitability for use as a neat fiber treatment composition.

Comparative Example 6

The following were combined and mixed for 15 minutes: 6.0 parts of a trimethylsiloxy-endblocked dimethylpolysiloxane having a viscosity of 10 $mm^2/s$, 6.0 parts of magnesium stearate, and 10.0 parts of a methylpolysiloxane resin comprising 45 mole% $(CH_3)_3SiO_{1/2}$ and 55 mole% $SiO_{4/2}$ units (no silanol groups). This was followed by the addition of 78.0 parts of a trimethylsiloxy-endblocked dimethylpolysiloxane having a viscosity of 10 $mm^2/s$ and additional mixing for 15 minutes which resulted in a fiber treatment composition. This composition was tested for sedimentation score, viscosity, and fiber/metal coefficient of kinetic friction, and the results are reported in Table II. Table II also has a general evaluation for use as a neat fiber treatment composition.

Table II

| | sedimentation score (%) | | | viscosity ($mm^2/s$) | fiber/metal coefficient of kinetic friction | general evaluation |
|---|---|---|---|---|---|---|
| | 1 day | 2 days | 3 days | | | |
| Ex. 3 | 0.8 | 1.1 | 1.5 | 20.0 | 0.115 | optimal: excellent dispersion stability |
| Ex. 4 | 0.7 | 1.0 | 1.2 | 20.5 | 0.106 | optimal: excellent dispersion stability |
| Ex. 5 | 0.5 | 0.7 | 0.9 | 22.5 | 0.120 | optimal: excellent dispersion stability |
| Comp. Ex. 5 | 1.5 | 2.5 | 3.2 | 19.8 | 0.121 | unsuitable: low dispersion stability |
| Comp. Ex. 6 | 0.4 | 0.5 | 0.6 | 32.3 | 0.125 | unsuitable: high viscosity |

**Claims**

1. A fiber treatment composition comprising:

   (A) 100 weight parts of a dimethylpolysiloxane having a viscosity at 25°C of 2 to 100 $mm^2/s$;
   (B) 1 to 20 weight parts of a metal salt of a fatty acid having from 10 to 20 carbon atoms; and
   (C) 0.05 to 10 weight parts of at least one organopolysiloxane resin comprising $SiO_{4/2}$ units and $R_3SiO_{1/2}$ units wherein R denotes a monovalent hydrocarbon group, with the proviso that said resin is free of $RSiO_{3/2}$ units and R is as defined above.

2. A composition according to claim 1 wherein
   (A) is a triorganosiloxy-endblocked dimethylpolysiloxane.

3. A composition according to Claim 1, wherein
   (B) is selected from magnesium stearate, zinc stearate, calcium stearate, or barium stearate.

4. A composition according to Claim 1, wherein R is selected from alkyl groups, alkenyl groups, aryl groups, or haloalkyl groups.

5. A composition according to Claim 1, wherein organopolysiloxane resin (C) further comprises SiOR' groups wherein R' is selected from hydrogen atom, a monovalent hydrocarbon group, or a methoxyethyl group.

6. A method of treating a fiber substrate, the method comprising the step of applying the composition of Claim 1 to said substrate.

7. A method according to Claim 6, further comprising the step of heating the substrate.

8. A method according to Claims 6 or 7, wherein the fiber is selected from wool, silk, flax, cotton, angora, mohair, rayon, bemberg, acetate, polyester, polyamide, polyacrylonitrile, polyvinyl chloride, vinylon, polyethylene, polypropylene, or spandex.

**Patentansprüche**

1. Faserbehandlungszusammensetzung enthaltend:

   (A) 100 Gewichtsteile eines Dimethylpolysiloxans mit einer Viskosität von 2 bis 100 mm$^2$/s bei 25°C,
   (B) 1 bis 20 Gewichtsteile eines Metallsalzes einer Fettsäure mit 10 bis 20 Kohlenstoffatomen und
   (C) 0,05 bis 10 Gewichtsteile wenigstens eines Organopolysiloxanharzes, das $SiO_{4/2}$-Einheiten und $R_3SiO_{1/2}$-Einheiten enthält, worin R für eine einbindige Kohlenwasserstoffgruppe steht, unter der Voraussetzung, dass dieses Harz frei von $RSiO_{3/2}$-Einheiten ist, wobei R wie oben definiert ist.

2. Zusammensetzung nach Anspruch 1, worin (A) ein Dimethylpolysiloxan mit endständigen Triorganosiloxygruppen ist.

3. Zusammensetzung nach Anspruch 1, worin (B) ausgewählt ist aus Magnesiumstearat, Zinkstearat, Calciumstearat oder Bariumstearat.

4. Zusammensetzung nach Anspruch 1, worin R ausgewählt ist aus Alkylgruppen, Alkenylgruppen, Arylgruppen oder Halogenalkylgruppen.

5. Zusammensetzung nach Anspruch 1, worin das Organopolysiloxanharz (C) zusätzlich SiOR'-Gruppen enthält, worin R' ausgewählt ist aus dem Wasserstoffatom, einer einbindigen Kohlenwasserstoffgruppe oder einer Methoxyethylgruppe.

6. Verfahren zur Behandlung eines Fasersubstrats, wobei das Verfahren den Schritt des Aufbringens der Zusammensetzung nach Anspruch 1 auf dieses Substrat umfasst.

7. Verfahren nach Anspruch 6, das zusätzlich den Schritt des Erwärmens des Substrats umfasst.

8. Verfahren nach den Ansprüchen 6 oder 7, worin die Faser ausgewählt ist aus Wolle, Seide, Flachs, Baumwolle, Angora, Mohair, Rayon, Bemberg Seide, Acetat, Polyester, Polyamid, Polyacrylnitril, Polyvinylchlorid, Vinylon, Polyethylen, Polypropylen oder Spandex.

**Revendications**

1. Composition pour le traitement de fibres comprenant :

   (A) 100 parties en poids d'un diméthylpolysiloxane ayant une viscosité à 25°C de 2 à 100 mm$^2$/s ;
   (B) 1 à 20 parties en poids d'un sel métallique d'un acide gras ayant de 10 à 20 atomes de carbone ; et
   (C) 0,05 à 10 parties en poids d'au moins une résine organopolysiloxane comprenant des unités $SiO_{4/2}$ et des unités $R_3SiO_{1/2}$, où R représente un groupe hydrocarboné monovalent, à condition que ladite résine soit exempte d'unités $RSiO_{3/2}$ et que R soit tel que défini ci-dessus.

2. Composition selon la revendication 1, dans laquelle (A) est un diméthylpolysiloxane à terminaisons triorgano-siloxy.

3. Composition selon la revendication 1, dans laquelle (B) est choisi parmi le stéarate de magnésium, le stéarate de zinc, le stéarate de calcium, ou le stéarate de baryum.

4. Composition selon la revendication 1, dans laquelle R est choisi parmi les groupes alkyle, les groupes alcényle, les groupes aryle, ou les groupes halogénoalkyle.

5. Composition selon la revendication 1, dans laquelle la résine organosiloxane (C) comprend, en outre, des groupes SiOR' où R' est choisi parmi un atome d'hydrogène, un groupe hydrocarboné monovalent, ou un groupe méthoxyéthyle.

6. Procédé de traitement d'un substrat en fibres, le procédé comprenant l'étape consistant à appliquer la composition de la revendication 1 audit substrat.

7. Procédé selon la revendication 6 comprenant, en outre, l'étape consistant à chauffer le substrat.

8. Procédé selon la revendication 6 ou 7, dans lequel la fibre est choisie parmi la laine, la soie, le lin, le coton, l'angora, le mohair, la rayonne, le bemberg, l'acétate, le polyester, le polyamide, le polyacrylonitrile, le polychlorure de vinyle, le vinylon, le polyéthylène, le polypropylène, ou le spandex.